# FASCICULE DE BREVET EUROPEEN

(11) **EP 3 086 097 B1**
(45) Date de publication et mention de la délivrance du brevet: **06.05.2020**
(21) Numéro de dépôt: 16166673.0
(22) Date de dépôt: 22.04.2016
(51) Int. Cl.: G01D 11/24

(54) **SYSTÈME DE MESURE DES DÉPLACEMENTS D'UN ORGANE MOBILE NOTAMMENT D'UN AÉRONEF**
SYSTEM ZUR BEWEGUNGSMESSUNG EINES MOBILEN ORGANS, INSBESONDERE EINES LUFTFAHRZEUGS
DISPLACEMENT MEASURING SYSTEM FOR A MOBILE PART IN PARTICULAR OF AN AIRCRAFT

(30) Priorité: 23.04.2015 FR 1553638
(43) Date de publication de la demande: 26.10.2016
(73) Titulaire: Meggitt (Sensorex), 74166 Archamps (FR)
(72) Inventeur: LATTION, Raphaël, 74166 ARCHAMPS Cedex (FR)
(74) Mandataire: Lavoix

(56) Documents cités:
- EP-A1- 0 790 489
- EP-A2- 2 522 961
- EP-A2- 2 801 794
- WO-A2-2010/047621
- DE-A1- 4 342 377

## Description

La présente invention concerne un système de mesure des déplacements d'un organe mobile notamment d'un aéronef.

On connaît déjà dans l'état de la technique, des systèmes de mesure pour ce type d'applications.

D'une façon générale, ces systèmes comportent des moyens formant capteur de mesure associés à l'organe mobile dont il y a lieu de mesurer les déplacements.

La sortie de ces moyens formant capteur de mesure est reliée à des moyens formant conditionneur de signaux de sortie de ceux-ci.

Ces moyens formant conditionneur sont distincts et séparés de ces moyens formant capteur et sont raccordés à ceux-ci à travers des moyens de liaison.

Enfin des moyens de traitement de signaux de sortie des moyens formant conditionneur, délivrent des informations de déplacement de l'organe mobile.

Les moyens formant capteur de mesure comportent par exemple des capteurs à transformateur différentiel variable linéaire.

Ce type de capteurs est destiné à mesurer, par exemple, le déplacement linéaire d'un élément mobile par rapport à un élément fixe de ce capteur.

En fait, ce capteur comporte deux pièces principales à savoir une partie mobile appelée équipage mobile de capteur, reliée à la pièce dont on veut connaître et mesurer le déplacement et une partie fixe appelée corps de capteur.

Ce capteur est composé d'un bobinage primaire et de deux bobinages secondaires, réalisés autour d'un tube métallique isolé appelé tube flasque.

Le bobinage primaire est alimenté par une tension ou un courant alternatif par exemple sinusoïdal, délivré par une source d'alimentation.

Cette tension d'alimentation permet de générer un champ magnétique à l'intérieur du capteur.

Grâce au couplage magnétique créé par un noyau ferromagnétique fixé sur l'équipage mobile, les deux bobinages secondaires délivrent alors simultanément deux signaux secondaires sinusoïdaux A et B, d'amplitudes proportionnelles au déplacement de l'équipage mobile à l'intérieur du tube flasque.

L'exploitation de la différence entre les deux signaux secondaires A et B permet d'obtenir un signal alternatif d'amplitude proportionnelle à la position de l'organe dont on veut mesurer les déplacements.

Ce type de capteur est appelé capteur passif puisqu'il n'intègre pas d'électronique.

Par ailleurs, l'absence de contact mécanique ou de frottement entre la partie mobile et la partie fixe, fait que ce type de capteurs présente une fiabilité exceptionnelle par rapport aux autres technologies.

C'est la raison pour laquelle cette technologie est largement utilisée dans les domaines tels que l'aéronautique pour les commandes de vol primaires et secondaires, les commandes de frein, d'ouverture de volets réacteur, de mini manches de pilotage, etc...

Ces capteurs sont ainsi directement intégrés par exemple au cœur des actionneurs hydrauliques ou électriques, afin de mesurer la position et le déplacement d'un vérin et indirectement d'une gouverne, comme par exemple un aileron, un spoiler, etc...

Dans la plupart des cas, ce type de capteurs pour ce type d'applications est soumis à une pression hydraulique très élevée.

De plus les moyens formant conditionneur de signaux issus d'un tel capteur, sont relativement complexes.

En effet, il faut réaliser une démodulation synchrone ou asynchrone sur le signal double (A-B)/(A+B), afin de s'affranchir des variations de la tension d'alimentation du capteur.

Sur la plupart des aéronefs, cette démodulation est réalisée au niveau du ou des calculateurs de commande de vol situés à proximité du cockpit.

Mais ceci se traduit par des longueurs de câbles et un poids importants puisque chaque capteur présente alors six fils de liaison.

De plus, les fortes longueurs de câbles engendrent des capacités parasites importantes, qui ont pour effet de diminuer la précision de la chaîne de mesure complète et d'accroître la difficulté de détection de pannes de capteur, comme, par exemple, une coupure d'un bobinage.

On sait qu'aujourd'hui il est difficile d'obtenir une précision optimale meilleure, par exemple, que 1,5% de la pleine échelle, sur la chaine de mesure complète et sur une gamme de températures importante comme, par exemple, entre - 55 et + 85°C.

Pour résoudre ces différents problèmes posés par ce type de capteurs, et notamment pour améliorer la précision de la chaine, réduire le nombre de câbles et de fils utilisés à quatre, et diminuer la complexité des moyens formant calculateur, on a proposé des capteurs à électronique analogique embarquée.

Dans ce cas, le conditionneur électronique est placé au cœur du capteur.

Cette technologie permet d'obtenir une précision d'environ 1,1% de la pleine échelle sur la chaîne de mesure complète.

Le principal inconvénient de ces capteurs, est la réduction du temps moyen avant panne (MTBF pour « Mean Time Before Failure » en anglais), qui, par exemple, est divisé d'un rapport 3 par rapport à un capteur passif.

Ce faible MTBF exclut alors l'utilisation de ces capteurs actifs dans des applications aéronautiques et plus précisément pour les commandes d'aéronefs, puisqu'une panne de capteur nécessiterait un démontage complet de l'actionneur.

Pour améliorer encore la précision, réduire le nombre de câbles utilisés à quatre et diminuer encore la complexité des capteurs, des capteurs électroniques numériques intégrés « intelligents » (« smart » en anglais), sont aujourd'hui disponibles sur le marché.

Dans ce cas, l'électronique de conditionnement est placée au cœur du capteur.

Cette électronique est composée d'un cœur numérique, comme par exemple un microcontrôleur ou un microprocesseur, pour réaliser une compensation numérique de toutes les erreurs du capteur, telles que la dérive de gain et de zéro en température, la non linéarité, etc...

Cette technologie de capteurs permet d'obtenir une précision de l'ordre de 0,3% de la pleine échelle.

L'inconvénient encore de ce type de capteurs est une très forte réduction du MTBF qui est divisé d'un rapport 5 par rapport à un capteur passif.

Dans ce cas également, ce faible MTBF exclut l'utilisation de ces capteurs intelligents dans les applications aéronautiques et plus précisément pour les commandes de vol d'aéronefs pour la même raison que celle décrite précédemment. EP2801794 A2, DE4342377 A1 et EP0790489 montrent des systèmes connus de mesure des déplacements d'un organe mobile, et EP2522961 A2 divulgue un autre système de mesure connu comprenant un capteur, un conditionneur de signaux et des moyens de traitements de signaux.

Le but de l'invention est donc de résoudre ces problèmes.

A cet effet, l'invention a pour objet un système de mesure des déplacements d'un organe mobile notamment d'un aéronef selon la revendication 1.

Suivant d'autres caractéristiques de la structure selon l'invention, le système de mesure comprend les caractéristiques des revendications 2 à 8, prises seules ou en combinaison.

L'invention sera mieux comprise à l'aide de la description qui va suivre, donnée uniquement à titre d'exemple et faite en se référant aux dessins annexés, sur lesquels :
- les figures 1 et 2 illustrent respectivement la structure et le fonctionnement d'un capteur à transformateur différentiel variable linéaire de l'état de la technique,
- la figure 3 représente un schéma synoptique illustrant la structure et le fonctionnement d'un système de mesure selon l'invention,
- la figure 4 représente un schéma synoptique illustrant le fonctionnement d'un système de mesure selon l'invention, lors d'une phase d'acquisition d'informations, et
- la figure 5 représente un schéma synoptique d'un système de mesure selon l'invention, illustrant une variante de réalisation de moyens d'acquisition de la température de fonctionnement des moyens formant capteur de mesure, entrant dans la constitution de ce système de mesure.

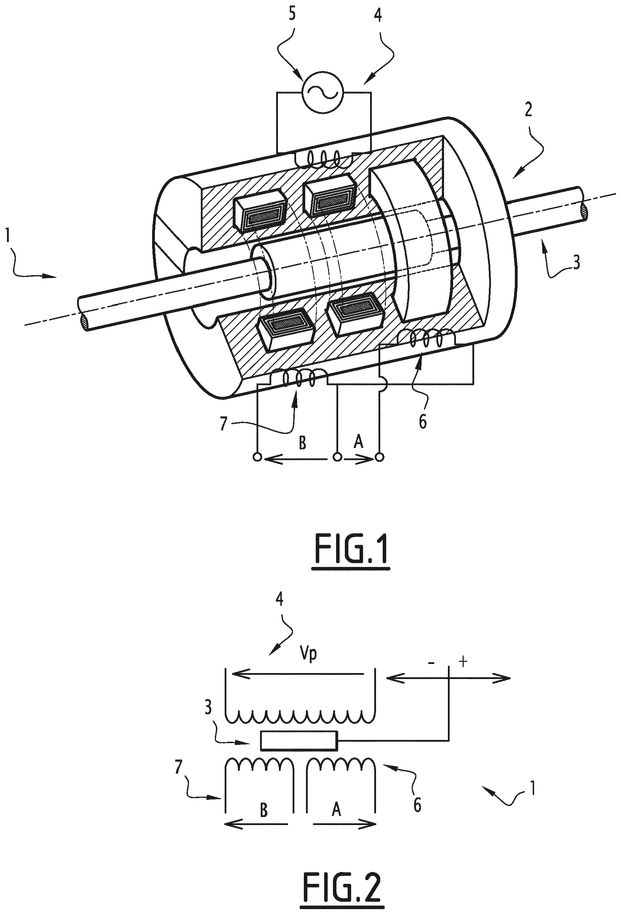

On a illustré sur les figures 1 et 2, une vue et un schéma synoptique, respectivement, illustrant la structure et le fonctionnement d'un capteur à transformateur différentiel variable linéaire.

Sur ces figures 1 et 2, ce capteur est désigné par la référence générale 1.

De façon classique, ce capteur 1 comporte un corps fixe désigné par la référence générale 2 et un équipage mobile désigné par la référence générale 3.

L'équipage mobile 3 est associé à l'organe dont on veut mesurer les déplacements.

Le corps fixe 2 est associé par exemple à un bobinage primaire désigné par la référence générale 4, raccordé à une source d'alimentation désignée par la référence générale 5.

A ce bobinage primaire 4, sont associés deux bobinages secondaires désignés respectivement par les références 6 et 7, délivrant des signaux complémentaires A et B.

Comme cela a été indiqué précédemment, grâce au couplage magnétique créé par un noyau ferromagnétique fixé sur l'équipage mobile 3, les deux bobinages secondaires délivrent simultanément deux signaux sinusoïdaux A et B, d'amplitudes proportionnelles au déplacement de l'équipage mobile 3 à l'intérieur du corps fixe 2.

L'exploitation de la différence entre les deux signaux secondaires A et B, permet d'obtenir un signal d'amplitude proportionnelle à la position de l'équipage mobile 3, ce qui permet d'en obtenir les déplacements.

Un tel capteur 1 peut par exemple être intégré dans un système de mesure de déplacement selon l'invention.

Bien entendu d'autres structures de capteurs peuvent être envisagées pour mesurer le déplacement d'un organe mobile d'un aéronef, que ce déplacement soit un déplacement rotatif, linéaire ou autre.

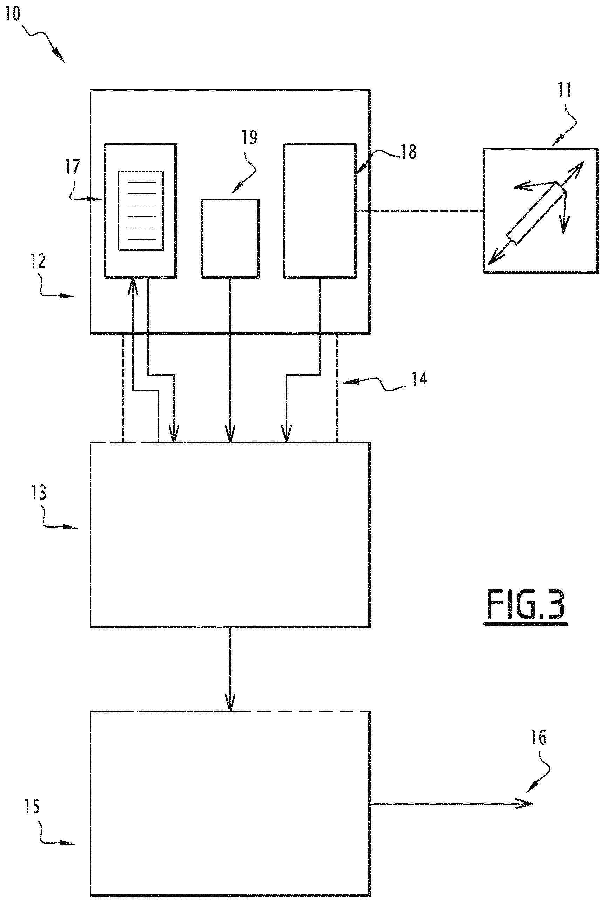

Ceci est par exemple illustré sur la figure 3, qui représente un schéma synoptique d'un système de mesure selon l'invention.

Ce système de mesure est désigné par la référence générale 10 sur cette figure 3, et permet donc de mesurer les déplacements d'un organe mobile notamment d'un aéronef, tel que l'organe désigné par la référence générale 11 sur cette figure.

D'une façon classique, ce système de mesure 10 comporte des moyens formant capteur de mesure associés à l'organe mobile 11, ces moyens formant capteur de mesure étant désignés par la référence générale 12.

Le système selon l'invention comporte également des moyens formant conditionneur de signaux de sortie des moyens formant capteur de mesure 12, distincts et séparés de ceux-ci et raccordés à ceux-ci à travers des moyens de liaison.

Ces moyens formant conditionneur de signaux sont par exemple désignés par la référence générale 13 et les moyens de liaison peuvent être constitués par exemple par des moyens de liaison filaires, désignés par la référence générale 14 sur cette figure 3.

Il va de soi bien entendu que des moyens de liaison autres que des moyens de liaison filaires peuvent être envisagés.

Ainsi, des moyens radiofréquences peuvent par exemple être utilisés pour assurer la liaison entre ces deux parties du système de mesure 10.

Le système selon l'invention comporte également des moyens de traitement des signaux de sortie des moyens formant conditionneur 13, pour délivrer des informations de déplacement de l'organe mobile 11.

Ces moyens de traitement sont désignés par la référence générale 15 sur cette figure 3 et les informations de déplacement de l'organe mobile 11, délivrées par ces moyens de traitement 15, sont désignées par la référence générale 16.

En fait et selon l'invention, les moyens formant capteur de mesure 12 comportent des moyens de stockage en outre d'informations de caractérisation technique intrinsèques de ceux-ci.

Ces moyens de stockage d'informations sont désignés par la référence générale 17 sur cette figure 3.

Ces moyens de stockage 17 peuvent également stocker des informations d'identification de ces moyens formant capteur de mesure 12.

Ces moyens de stockage 17 sont alors accessibles de l'extérieur, en lecture ou en écriture, pour permettre l'acquisition ou l'inscription des informations correspondantes dans ceux-ci.

Les informations de caractérisation technique intrinsèques et/ou d'identification des moyens formant capteur de mesure 12, comportent alors des informations choisies dans un groupe d'informations comprenant en outre des informations de :
- sensibilité,
- calage de zéro,
- déphasage,
- compensation de non linéarité,
- dérive de zéro,
- sensibilité à la température de fonctionnement,
- numéro de fabrication,
- vieillissement,
- plage de températures de fonctionnement,
- nombre de cycles de fonctionnement,
- date de fabrication,
- etc...

Ces différentes informations sont alors écrites et stockées dans ces moyens de stockage 17.

Le système de mesure selon l'invention est alors adapté pour mettre en oeuvre une première phase d'acquisition de ces informations, par exemple de caractérisation technique intrinsèques de ces moyens formant capteur de mesure 12, par les moyens formant conditionneur 13, décrits précédemment, et une seconde phase de paramétrage du fonctionnement de ces moyens formant conditionneur 13, à partir de ces informations de caractérisation récupérées.

Ceci permet notamment d'optimiser le fonctionnement de la chaîne et du système de mesure.

Ainsi les moyens formant conditionneur 13 reçoivent alors à partir des moyens de stockage 17 des moyens formant capteur de mesure 12, les informations de caractérisation et d'identification de ceux-ci le cas échéant.

Ces moyens formant conditionneur 13 reçoivent également à partir de ces moyens formant capteur de mesure 12, et plus particulièrement de la partie capteur proprement dite de ces moyens formant capteur de mesure 12, partie capteur désignée par la référence générale 18 sur cette figure, les informations relatives au déplacement de l'organe mobile 11.

Enfin, ces moyens formant conditionneur 13 peuvent également recevoir d'un capteur de température 19 intégré dans les moyens formant capteur de mesure 12, une information de température de fonctionnement de ces moyens formant capteur de mesure 12.

L'ensemble de ces informations permet alors de paramétrer au mieux, le fonctionnement des moyens formant conditionneur 13 et de tenir compte en particulier de la température de fonctionnement des moyens formant capteur de mesure 12.

Ce système de mesure 10 fonctionne alors avec une électronique de conditionnement numérique déportée et localisée en dehors de l'actionneur.

Ceci permet de la remplacer aisément sur l'aéronef en cas de panne des moyens formant conditionneurs 13.

De façon équivalente au capteur intelligent de l'état de la technique, ce conditionneur numérique déporté utilisé dans le système selon l'invention, effectue le conditionnement et la compensation numérique de toutes les erreurs inhérentes au capteur passif, telles que par exemple la dérive de gain et de zéro en température et la non linéarité.

Pour ce faire, les moyens formant conditionneur déportés 13, utilisent des informations de température de fonctionnement des moyens formant capteur de mesure 12 et les caractéristiques propres de chacun de ceux-ci, telles que délivrées ou enregistrées dans les moyens de stockage 17 correspondants.

Ces informations propres à chacun des moyens formant capteur de mesure 12, sont caractérisées et chargées dans les moyens de stockage 17 correspondant, par exemple lors de la fabrication de ceux-ci.

Comme cela a été indiqué précédemment, différentes informations peuvent être enregistrées dans ces moyens de stockage 17.

Comme cela a été indiqué précédemment, les échanges d'informations entre les moyens formant capteur de mesure 12 et les moyens formant conditionneur 13, peuvent être réalisés sur liaison filaire.

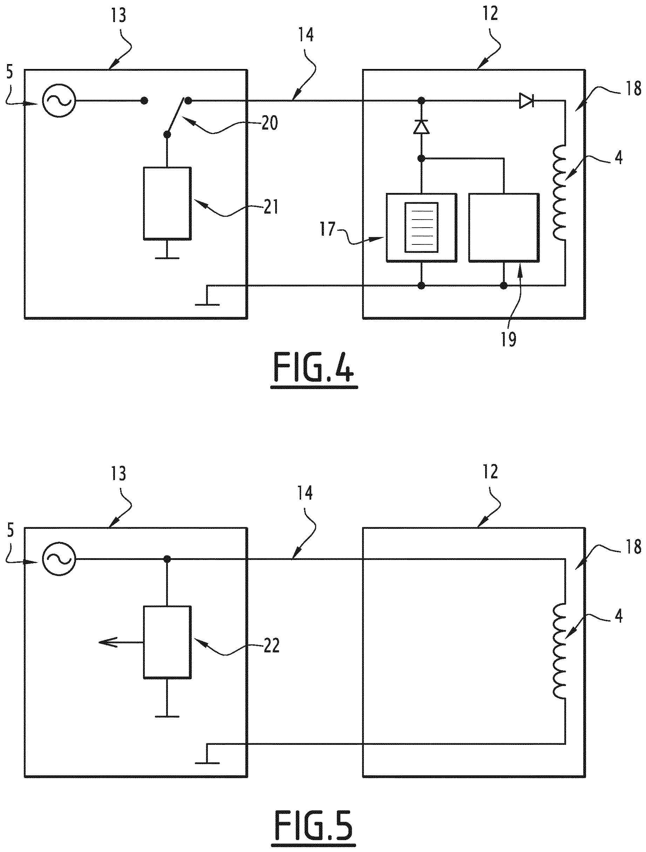

On a illustré sur la figure 4, un exemple de fonctionnement permettant aux moyens formant conditionneur 13 de récupérer les informations contenues dans les moyens de stockage 17 des moyens formant capteur de mesure 12.

Sur cette figure 4, on a utilisé des références identiques pour désigner des pièces identiques ou analogues à celles illustrées sur la figure 3.

C'est ainsi que l'on reconnaît sur cette figure 4, les moyens formant capteur de mesure 12, les moyens formant conditionneur 13 et les moyens de liaison 14 entre ceux-ci.

On reconnaît également sur cette figure 4, la partie formant capteur 18 proprement dite des moyens formant capteur de mesure 12, avec le bobinage primaire 4 et la source d'alimentation 5 de celui-ci.

On reconnaît également sur cette figure 4, les moyens de stockage 17 et le capteur de température 19, intégrés dans les moyens formant capteur de mesure 12.

En fait dans cette figure 4, on utilise des moyens de commutation désignés par la référence générale 20 et intégrés dans les moyens formant conditionneur 13, pour permettre la récupération des informations par ceux-ci.

Dans une position, ces moyens de commutation 20 permettent à la source d'alimentation 5 d'être raccordée au bobinage primaire 4 de la partie capteur 18 proprement dite des moyens formant capteur de mesure 12, pour alimenter ce bobinage primaire 4 afin de permettre à ces moyens de délivrer, comme décrit précédemment, les signaux de mesure.

Dans l'autre position, telle qu'illustrée sur cette figure 4, ces moyens de commutation 20 permettent à des moyens d'acquisition 21 de ces moyens formant conditionneur 13, de récupérer des informations issues des moyens de stockage 17 et du capteur de température 19.

Cette récupération d'informations se fait donc à travers les moyens de liaison 14.

L'alimentation de la partie capteur 18 proprement dite des moyens formant capteur de mesure 12, se fait également à travers ces moyens de liaison 14.

Une fois les moyens de commutation 20 basculés, la récupération d'informations peut quant à elle se faire en numérique, à travers ces moyens de liaison 14.

On notera d'ailleurs que l'écriture d'informations peut également se faire à travers ces moyens de liaison 14 de façon analogue.

On a indiqué précédemment que les moyens formant capteur de mesure 12 peuvent comporter un capteur de température 19 proprement dit.

Il va de soi bien entendu que d'autres moyens pour obtenir la température de fonctionnement de la partie capteur 18 proprement dite des moyens formant capteur de mesure 12, peuvent être envisagés.

Ainsi par exemple sur la figure 5, on a illustré une mesure de résistivité du bobinage primaire 4 décrit précédemment, pour obtenir cette information de température de fonctionnement.

Sur cette figure 5, les mêmes références sont utilisées pour désigner des pièces identiques ou analogues à celles déjà décrites.

C'est ainsi que l'on reconnaît sur cette figure 5, les moyens formant capteur de mesure 12, les moyens formant conditionneur 13 et les moyens de liaison 14.

Les moyens formant conditionneur 13 comportent toujours la source d'alimentation 5 du bobinage primaire 4 de la partie capteur 18 proprement dite des moyens formant capteur de mesure 12.

Dans l'exemple de réalisation illustré sur cette figure 5, l'information de température de fonctionnement de la partie capteur 18 proprement dite des moyens formant capteur de mesure 12, est obtenue en sortie de moyens de mesure de résistivité 22, intégrés dans les moyens formant conditionneur 13.

Ces moyens 22 permettent de mesurer la résistivité électrique d'au moins un élément sensible à la température, intégré dans les moyens formant capteur de mesure 12, comme par exemple le bobinage primaire 4.

Il est alors possible de déterminer à partir de cette résistivité électrique, la température de fonctionnement de la partie capteur 18 proprement dite des moyens formant capteur de mesure 12 et de ceux-ci de façon générale.

On conçoit alors qu'une telle structure présente un certain nombre d'avantages au niveau de la précision de la chaîne de mesure.

Cette amélioration peut être obtenue par optimisation du fonctionnement de celle-ci, en fonction des informations de caractérisation intrinsèques des moyens formant capteur de mesure et d'informations d'état de fonctionnement ou de conditions de fonctionnement de ceux-ci, et en particulier de température.

Ceci permet d'adapter au mieux le paramétrage des différents éléments de cette chaîne de mesure et en particulier des moyens formant conditionneur 13.

Il n'est pas non plus nécessaire d'augmenter le nombre de fils par rapport au nombre de fils déjà utilisés.

Ainsi, la complexité et le poids du système de mesure notamment, ne sont pas accrus.

Ce système permet également de s'affranchir du réglage mécanique de la position de zéro des moyens formant capteur de mesure, lors de son montage dans l'actionneur par exemple d'un aéronef.

En effet dans le système de mesure selon l'invention, le réglage de zéro peut se faire automatiquement par une simple commande initiée par les moyens de traitement, alors que dans l'état de la technique, les moyens formant capteur de mesure sont munis d'un système de réglage mécanique de zéro extrêmement lourd et complexe.

Le principe de la compensation numérique de toutes les erreurs inhérentes aux moyens formant capteur de mesure, permet également de réduire les contraintes de conception, d'industrialisation et de fabrication, car il n'est plus nécessaire par exemple de réaliser le tri, les réglages, les prétests de ces moyens formant capteur de mesure lors de leur fabrication.

De plus ces moyens formant capteur de mesure peuvent être conçus et fabriqués sans contrainte de répétabilité des performances.

Enfin les moyens formant capteur de température et les moyens de stockage, intégrés aux moyens formant capteur de mesure peuvent être utiles aux fabricants d'actionneurs ou aux services de maintenance des aéronefs, par exemple pour des activités de maintenance préventive ou d'expertises de défaillances en cas de problème.

## Revendications

1. Système de mesure (10) des déplacements d'un organe mobile (11) notamment d'un aéronef, du type comportant :
- des moyens formant capteur de mesure (12) associés à l'organe mobile (11),
- des moyens formant conditionneur (13) de signaux de sortie des moyens formant capteur de mesure (12), distincts et séparés de ceux-ci et raccordés à ceux-ci à travers des moyens de liaison (14), et
- des moyens de traitement (15) de signaux de sortie des moyens formant conditionneur (13), pour délivrer des informations de déplacement (16) de l'organe mobile (11),
les moyens formant capteur de mesure (12) comportant des moyens de stockage (17) en outre d'informations de caractérisation technique intrinsèques de ceux-ci, le système (10) étant adapté pour mettre en oeuvre une phase d'acquisition de ces informations de caractérisation technique intrinsèques de ces moyens formant capteur de mesure (12), par les moyens formant conditionneur (13) et une phase de paramétrage du fonctionnement de ces moyens formant conditionneur (13), à partir de ces informations de caractérisation récupérées,
**caractérisé en ce que** le système de mesure (10) comporte des moyens (19 ; 22) d'acquisition de la température de fonctionnement des moyens formant capteur de mesure (12),
les moyens d'acquisition de la température de fonctionnement des moyens formant capteur de mesure (12) comportant des moyens (22) de détermination de cette température à partir d'une mesure de résistivité électrique d'au moins un élément sensible à la température, intégré dans les moyens formant capteur de mesure (12).

2. Système de mesure selon la revendication 1, **caractérisé en ce que** les moyens de liaison (14) entre les moyens formant capteur de mesure (12) et les moyens formant conditionneur (13) sont des moyens filaires.

3. Système de mesure selon la revendication 2, **caractérisé en ce que** les moyens formant conditionneur (13) comportent des moyens d'acquisition (21) des informations de caractérisation technique intrinsèques, à partir des moyens de stockage (17) correspondants des moyens formant capteur de mesure (12), à travers les moyens filaires.

4. Système de mesure selon la revendication 1, **caractérisé en ce que** les moyens de liaison (14) sont des moyens radiofréquences.

5. Système de mesure selon l'une quelconque des revendications précédentes, **caractérisé en ce que** l'élément sensible est un bobinage (4) des moyens formant capteur de mesure (12).

6. Système de mesure selon l'une quelconque des revendications 1 à 5, **caractérisé en ce que** les moyens de stockage (17) comportent également des informations d'identification des moyens formant capteur de mesure (12).

7. Système de mesure selon l'une quelconque des revendications 1 à 6, **caractérisé en ce que** les moyens de stockage (17) sont accessibles en écriture pour permettre l'inscription d'informations dans ceux-ci.

8. Système de mesure selon l'une quelconque des revendications 1 à 7, **caractérisé en ce que** les d'informations de caractérisation technique intrinsèques et/ou d'identification des moyens formant capteur de mesure (12) comportent des informations choisies dans un groupe d'informations comprenant en outre des informations de :
- sensibilité,
- calage de zéro,
- déphasage,
- compensation de non-linéarité,
- dérive de zéro,
- sensibilité à la température de fonctionnement,
- numéro de fabrication,
- vieillissement,
- plage de températures de fonctionnement,
- nombre de cycles de fonctionnement,
- date de fabrication.

## Patentansprüche

1. System zur Messung (10) der Bewegungen eines mobilen Organs (11), insbesondere eines Luftfahrzeugs, des Typs, der aufweist:
- Messsensormittel (12), die dem mobilen Organ (11) zugeordnet sind,
- Aufbereitungsmittel (13) von Ausgangssignalen der Messsensormittel (12), die sich von diesen unterscheiden und separat sind und mit diesen anhand von Verbindungsmitteln (14) verbunden sind, und
- Verarbeitungsmittel (15) von Ausgangssignalen der Aufbereitungsmittel (13), um Bewegungsinformationen (16) des mobilen Organs (11) bereitzustellen,
wobei die Messsensormittel (12) Speichermittel (17) ferner von intrinsischen technischen Charakterisierungsinformationen der Messsensormittel (12) aufweisen und das System (10) zur Durchführung einer Erfassungsphase dieser intrinsischen technischen Charakterisierungsinformationen dieser Messsensormittel (12) durch die Aufbereitungsmittel (13) und einer Einstellphase des Betriebs dieser Aufbereitungsmittel (13) auf der Basis dieser gewonnenen Charakterisierungsinformationen geeignet ist,
**dadurch gekennzeichnet, dass** das Messsystem (10) Erfassungsmittel (19; 22) der Betriebstemperatur der Messsensormittel (12) aufweist,
und dass die Erfassungsmittel der Betriebstemperatur des Messsensormittel (12) Bestimmungsmittel (22) dieser Temperatur auf der Basis einer elektrischen Widerstandsmessung mindestens eines temperaturempfindlichen Elements aufweisen, das in die Messsensormittel (12) integriert ist.

2. Messsystem nach Anspruch 1, **dadurch gekennzeichnet, dass** die Verbindungsmittel (14) zwischen den Messsensormitteln (12) und den Aufbereitungsmitteln (13) Drahtmittel sind.

3. Messsystem nach Anspruch 2, **dadurch gekennzeichnet, dass** die Aufbereitungsmittel (13) Erfassungsmittel (21) der intrinsischen technischen Charakterisierungsinformationen auf der Basis der entsprechenden Speichermittel (17) der Messsensormittel (12) über die Drahtmittel aufweisen.

4. Messsystem nach Anspruch 1, **dadurch gekennzeichnet, dass** die Verbindungsmittel (14) Funkfrequenzmittel sind.

5. Messsystem nach einem der vorangehenden Ansprüche, **dadurch gekennzeichnet, dass** das empfindliche Element eine Wicklung (4) der Messsensormittel (12) ist.

6. Messsystem nach einem der Ansprüche 1 bis 5, **dadurch gekennzeichnet, dass** die Speichermittel (17) ebenfalls Identifikationsinformationen der Messsensormittel (12) aufweisen.

7. Messsystem nach einem der Ansprüche 1 bis 6, **dadurch gekennzeichnet, dass** die Speichermittel (17) schreibberechtigt sind, um die Eintragung von Informationen in dieselben zu erlauben.

8. Messsystem nach einem der Ansprüche 1 bis 7, **dadurch gekennzeichnet, dass** die intrinsischen technischen Charakterisierungs- und/oder Identifikationsinformationen der Messsensormittel (12) Informationen aufweisen, die aus einer Gruppe von Informationen ausgewählt sind, die ferner Informationen umfassen über:
- Empfindlichkeit,
- Null-Auslenkung,
- Phasenverschiebung,
- Nichtlinearitätsausgleich,
- Null-Abdrift,
- Betriebstemperatur-Empfindlichkeit,
- Herstellungsnummer,
- Alterung,
- Betriebstemperaturbereich,
- Anzahl der Betriebszyklen,
- Herstellungsdatum.

## Claims

1. A displacement measuring system (10) for a mobile part (11), in particular of an aircraft, of the type including:
- means forming a measuring sensor (12) associated with the mobile part (11),
- means forming a conditioner (13) for output signals of the measuring sensor-forming means (12), distinct and separate therefrom and connected to the latter through connecting means (14), and
- processing means (15) for output signals from the conditioner-forming means (13), for delivering displacement information (16) for the mobile part (11),
the measuring sensor-forming means (12) including storage means (17) further for intrinsic technical characterization information for said measuring sensor-forming means (12), the system (10) being configured to implement a phase for the acquisition of this intrinsic technical characterization information of these measuring sensor-forming means (12), by the conditioner-forming means (13), and a phase for configuration of the operation of these conditioner-forming means (13), from this recovered characterization information,
**characterized in that** the measuring system (10) includes means (19; 22) for acquisition of the operating temperature of the measuring sensor-forming means (12),
the means for acquisition of the operating temperature of the measuring sensor-forming means (12) including means (22) for determining this temperature from an electrical resistivity measurement of at least one temperature-sensitive element, integrated into the measuring sensor-forming means (12).

2. The measuring system according to claim 1, **characterized in that** the connecting means (14) between the measuring sensor-forming means (12) and the conditioner-forming means (13) are wired means.

3. The measuring system according to claim 2, **characterized in that** the conditioner-forming means (13) include means (21) for acquiring intrinsic technical characterization information, from storage means (17) corresponding to the measuring sensor-forming means (12), through the wired means.

4. The measuring system according to claim 1, **characterized in that** the connecting means (14) are radiofrequency means.

5. The measuring system according to any one of the preceding claims, **characterized in that** the sensitive element is a coil (4) of the measuring sensor-forming means (12).

6. The measuring system according to any one of claims 1 to 5, **characterized in that** the storage means (17) also include identification information of the measuring sensor-forming means (12).

7. The measuring system according to any one of claims 1 to 6, **characterized in that** the storage means (17) are accessible in write mode to allow the recording of information therein.

8. The measuring system according to any one of claims 1 to 7, **characterized in that** the intrinsic technical characterization information and/or identification of the measuring sensor-forming means (12) includes information chosen from a group of information further comprising the following information:
- sensitivity,
- zero calibration,
- phase shift,
- nonlinearity compensation,
- zero drift,
- sensitivity at the operating temperature,
- production number,
- aging,
- range of operating temperatures,
- number of operating cycles,
- manufacturing date.
